# FASCICULE DE BREVET EUROPEEN

(11) **EP 3 775 499 B1**
(45) Date de publication et mention de la délivrance du brevet: **02.03.2022**
(21) Numéro de dépôt: 19720955.4
(22) Date de dépôt: 29.03.2019
(51) Int. Cl.: F01D 17/14, F02C 6/08, F04D 27/02, F16K 15/03

(54) **DISPOSITIF DE PRÉLÈVEMENT D'AIR POUR UN MOTEUR D'AÉRONEF**
ENTLÜFTUNGSVORRICHTUNG FÜR EINEN FLUGZEUGMOTOR
AIR BLEED DEVICE FOR AN AIRCRAFT ENGINE

(30) Priorité: 13.04.2018 FR 1853251
(43) Date de publication de la demande: 17.02.2021
(73) Titulaire: Safran Aircraft Engines, 75015 Paris (FR)
(72) Inventeur: DELAITRE, Pascal, Xavier, 77550 MOISSY-CRAMAYEL (FR); LAGARDE, Romain, Nicolas, 77550 MOISSY-CRAMAYEL (FR); PERROLLAZ, Jean-Marc, Claude, 77550 MOISSY-CRAMAYEL (FR); TESSIEREAU, Antonin, Etienne, Diego, 77550 MOISSY-CRAMAYEL (FR)
(74) Mandataire: Gevers & Orès
(86) Numéro de dépôt international: PCT/FR2019/050732
(87) Numéro de publication internationale: WO 2019/197744

(56) Documents cités:
- EP-A1- 3 095 985
- FR-A- 1 365 570
- US-A1- 2013 263 828

## Description

### Domaine technique :

La présente invention concerne le domaine des écopes ou vannes de prélèvement d'air dans les moteurs d'aéronefs et plus précisément leurs dispositifs de réglage pour s'adapter au fonctionnement du moteur.

### Etat de l'art :

Le problème d'un contrôle précis de l'ouverture d'une écope de prélèvement d'air se pose par exemple dans le cas d'un moteur où ce prélèvement est effectué dans la veine secondaire en vue de régler les jeux de la turbine.

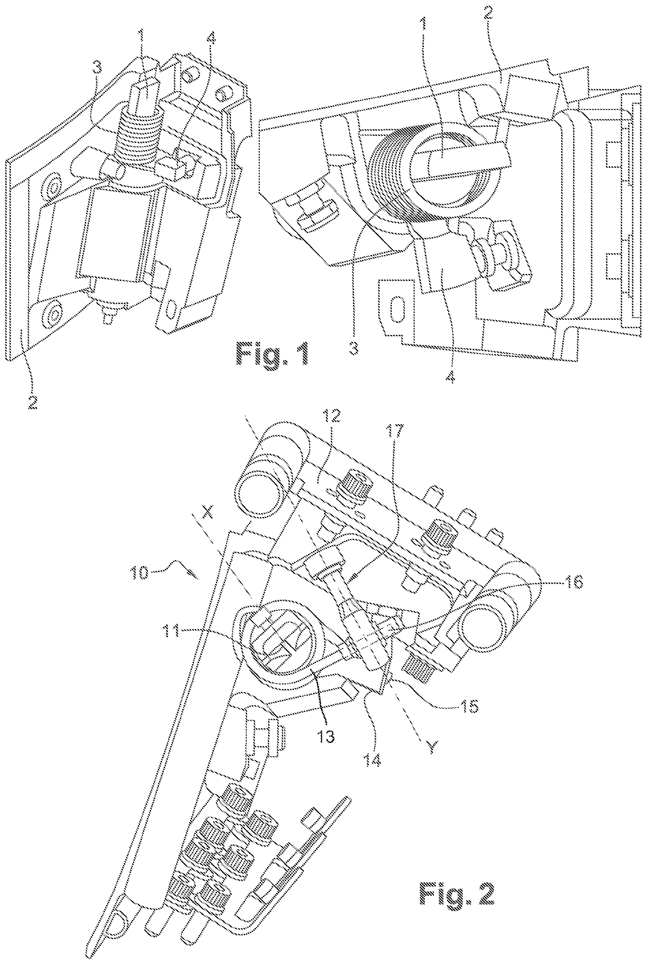

Selon une solution existante, illustrée sur la figure 1, un volet, non visible en entier, d'une écope de prélèvement dans la veine secondaire d'une turbomachine, est solidaire d'un arbre 1 qui tourne dans un bâti 2. Le rappel du volet lorsque l'écope n'est pas activée est assuré par un ressort de torsion 3 fixé à une extrémité sur le bâti 2 et à l'autre sur une partie du volet solidaire de l'arbre 1, ici au niveau d'une pièce de butée 4. Le réglage de la butée de la pièce 4 sur le bâti 2 permet de régler la course de l'arbre 1 pour assurer avec précision les positions extrêmes du volet, quelles que soient les variations de géométries induites par la fabrication des pièces.

Cependant, dans la mesure où le ressort 3 est fixé directement d'une part sur le bâti 2 de l'écope, d'autre part sur la ligne d'arbre 1, le réglage des butées 4 du volet impacte directement le tarage du ressort, sans que cela soit souhaité.

De plus, des variabilités existent également dans la production des ressorts. Cela induit des variabilités des couples de rappel pour une même pré-charge angulaire sur les ressorts d'une même production. En particulier, cela rend difficile d'assurer avec une précision suffisante un tarage identique sur une série de vannes devant fonctionner ensemble.

L'état de la technique comprend notamment le document FR1365570.

L'invention a pour but de proposer une alternative simple pour palier à ces inconvénients en utilisant un ressort pour effectuer le rappel des volets sur dispositifs de prélèvement d'air, notamment pour les vannes précédemment décrites.

### Présentation de l'invention:

L'invention concerne un dispositif de prélèvement d'air pour un moteur d'aéronef, comportant un bâti et un volet mobile en rotation autour d'un axe vis-à-vis du bâti, le dispositif comportant en outre un système de rappel configuré pour solliciter le volet dans une position déterminée autour de l'axe et comportant un ressort de torsion dont une première extrémité est reliée au volet et dont une seconde extrémité est reliée au bâti, caractérisé en ce que ladite seconde extrémité est reliée au bâti par des moyens de réglage par vissage de la pré-charge du ressort lorsque le volet est dans ladite position déterminée.

Le fait d'interposer des moyens de réglage de la position de la seconde extrémité du ressort entre cette dernière et le bâti permet d'ajuster le couple de rappel indépendamment de la position donnée du volet. Cela permet de palier aux inconvénients précités. D'une part, pour un ressort donné, on peut ajuster le couple de rappel en ayant réglé les positions de butée. D'autre part, pour une même position donnée du volet, on peut rattraper des écarts de fabrication entre deux ressorts pour obtenir le même tarage. L'utilisation du vissage est une solution simple pour réaliser des moyens de réglage et permet d'éviter des manœuvres complexes.

Avantageusement, lesdits moyens de réglage comprennent une biellette dont une première extrémité est articulée sur ladite seconde extrémité du ressort et dont une seconde extrémité opposée est filetée et vissée dans une vis tubulaire de réglage portée par ledit bâti.

De préférence, ladite première extrémité de la biellette est reliée par une liaison rotulante à ladite seconde extrémité du ressort.

Encore plus préférentiellement, ladite première extrémité de la biellette comprend un orifice de montage d'une rotule traversée par une bague de guidage dans laquelle est engagée ladite seconde extrémité du ressort.

Ces deux derniers éléments permettent au brin du ressort, au niveau de la deuxième extrémité, de suivre librement le mouvement de la tête de biellette. On obtient ainsi un guidage précis et immédiat de la seconde extrémité tout en évitant des déformations du brin du ressort.

Avantageusement, ladite vis de réglage comprend un corps tubulaire à filetage interne qui traverse une paroi dudit bâti et dans lequel est vissée ladite seconde extrémité filetée de la biellette, et une tête qui prend appui sur ladite paroi et est configurée pour coopérer avec un outil d'entraînement en rotation de cette vis.

De préférence, un écrou d'immobilisation en rotation est vissé sur la vis de réglage. Encore plus préférentiellement, ledit écrou est vissé sur un filetage externe dudit corps tubulaire et prend appui sur ladite paroi du bâti du côté opposé à ladite tête.

Avantageusement, ladite biellette s'étend le long d'un axe sensiblement perpendiculaire à ladite seconde extrémité du ressort et/ou à l'axe de rotation du volet.

Avantageusement, ledit ressort est hélicoïdal et s'étend sensiblement autour dudit axe de rotation du volet.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 représente une perspective vue de côté et une perspective vue de face d'une vanne selon l'état de l'art.
La figure 2 représente une perspective vue de face d'une vanne selon l'invention.
La figure 3 représente une vue de face, perpendiculaire à l'axe de rotation du volet, avec une coupe transversale au niveau de l'élément 17, de la vanne de la figure 2.

### Description d'un mode de réalisation de l'invention :

Un exemple d'écope 10 concernée par l'invention, en référence à la figure 2, comporte les mêmes mécanismes que l'écope présentée en introduction pour le mouvement de rotation du volet autour de l'axe X de son arbre 11 par rapport au bâti 12. Ici, la ligne d'arbre 11 et une pièce 14 sont les seules parties visibles du volet. L'écope peut être semblable en tous points à la précédente, hormis le mécanisme de rappel du volet. Ici, un ressort de torsion 13, s'enroulant autour de l'arbre 11 avec un nombre de spires adapté au niveau de la force de rappel souhaité, est fixé par une première 15 de ses extrémités à une pièce 14 du volet. Ladite pièce 14 peut servir, comme précédemment à régler les butées du volet. Par contre, la deuxième extrémité 16 du ressort de torsion est fixée à un dispositif 17 faisant l'interface avec le bâti 12.

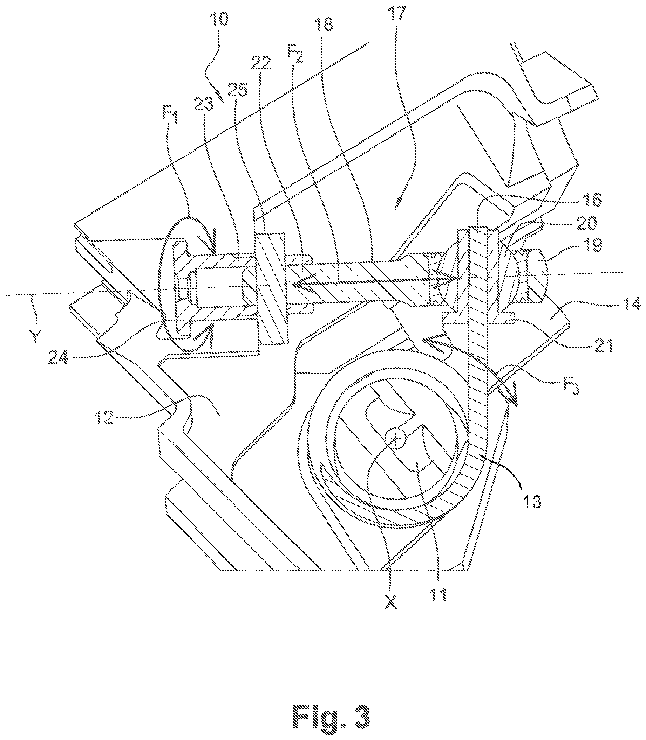

En référence à la figure 3, ce dispositif 17 comporte plusieurs pièces, de manière à pouvoir régler le couple de rappel du ressort 13, indépendamment de la position du volet autour de l'axe X de l'arbre 11 lorsqu'il est en butée. Sur la figure 3, le volet est dans une position de butée définie par le réglage de l'interaction de la pièce 14 avec le bâti 12.

Le dispositif 17 comporte une biellette 18 qui est montée dans le bâti 12 de manière à être sensiblement perpendiculaire à l'arbre 11, à côté de ce dernier et positionnée de façon à être traversée par la seconde extrémité 16 du ressort 13.

A cet effet, une première extrémité 19 de la biellette 18, qui est au niveau de l'arbre 11 du volet, comporte une rotule 20 avec un alésage cylindrique pour accueillir la seconde extrémité 16 du ressort de torsion 13.

Avantageusement, l'alésage cylindrique de la rotule 20 contient une bague de guidage 21. La présence de la bague de guidage 21 permet d'ajuster précisément le diamètre du passage pour la tige du ressort 13 à sa seconde extrémité 16, afin d'obtenir un guidage précis de la tige du ressort 13 dans la rotule 20.

Une deuxième extrémité 22 de la biellette 18, du côté du bâti 12, comporte un filetage externe conformé pour coopérer avec le taraudage d'une vis de réglage tubulaire creuse 23, installée dans un alésage du bâti 12 de manière à le traverser suivant l'axe Y de la biellette 18.

La vis de réglage 23 comporte une tête 24 qui est positionnée en butée contre une surface du bâti 12 située de l'autre côté dudit bâti par rapport à la seconde extrémité 16 du ressort 13. Avantageusement, ladite tête 24 comporte une empreinte pour accueillir une clé de réglage qui permet de la faire tourner dans l'alésage du bâti autour de l'axe Y de la biellette 18.

Ladite vis de réglage 23 présente de plus un filetage externe sur sa partie émergeant du bâti 12 vers le ressort. Un écrou de blocage 25 est vissé sur le filetage externe de la vis 23, en appui sur le bâti 12 du côté opposé à la tête 24 de la vis. L'écrou de blocage 25 est de préférence auto-freinant, bridé en position.

Le dispositif qui vient d'être décrit peut ainsi être utilisé pour régler la pré-charge, ou tarage, du ressort 13 lorsque le volet est dans la position représentée sur la figure 3 par les positions de son arbre 11 et de la pièce 14, ici servant de butée en rotation tout en maintenant la première extrémité 15 du ressort 13. Le procédé de réglage comporte les étapes suivantes.

Premièrement on desserre l'écrou de blocage 25 pour libérer la vis de réglage 23.

Dans une deuxième étape, on fait tourner la vis de réglage 23, à l'aide d'une clé adaptée, autour de son axe Y comme indiqué par la flèche F1. Comme la biellette 18 est bloquée en rotation par la présence de la seconde extrémité 16 du ressort dans la bague de guidage 21, la rotation de la vis de réglage 23 entraîne le vissage ou le dévissage de la biellette 18 dans son taraudage. Comme indiqué par la flèche F2, cette action déplace donc la tête 19 de la biellette 18 en translation suivant son axe Y, dont la direction est sensiblement perpendiculaire à l'axe X de l'arbre 11. La translation de la tête 19 de la biellette entraîne avec elle la seconde extrémité 16 du ressort 13. Le mouvement de rotation de la rotule 20 et le glissement du brin du ressort 13 dans la bague de guidage 21 permettent à la seconde extrémité 16 du ressort 13 de suivre simultanément et sans déformation locale le déplacement de la biellette 18.

De cette manière, le brin du ressort 13 reliant sa seconde extrémité 16 à la dernière spire d'enroulement effectue un mouvement de rotation autour de l'axe X de l'arbre 11 du volet, ce qui modifie son angle de torsion, donc le tarage du ressort 13.

La vis de réglage 23 est ainsi tournée dans le sens adéquat autour de son axe Y, jusqu'à ce que le couple de rappel spécifié pour le ressort soit obtenu.

Dans la dernière étape, on resserre l'écrou auto-freinant 25 pour bloquer le système de réglage.

Ce procédé présente l'avantage de pouvoir être repris pour réajuster le tarage, ou pré-charge, du ressort 13 sur une position de butée modifiée du volet, par exemple ici en modifiant l'interaction de la pièce 14 avec le bâti 12, puisqu'à aucun moment il n'intervient sur la première extrémité 15 fixée au volet.

## Revendications

1. Dispositif de prélèvement d'air pour un moteur d'aéronef, comportant un bâti (12) et un volet mobile en rotation autour d'un axe (X) vis-à-vis du bâti (12), le dispositif comportant en outre un système de rappel configuré pour solliciter le volet dans une position déterminée autour de l'axe (X) et comportant un ressort de torsion (13) dont une première extrémité (15) est reliée au volet et dont une seconde extrémité (16) est reliée au bâti (12), **caractérisé en ce que** ladite seconde extrémité (16) est reliée au bâti par des moyens de réglage (17) par vissage de la pré-charge du ressort lorsque le volet est dans ladite position déterminée ;
lesdits moyens de réglage (17) comprennent une biellette (18) dont une première extrémité (19) est articulée sur ladite seconde extrémité (16) du ressort (13) et dont une seconde extrémité (22) opposée est filetée et vissée dans une vis tubulaire de réglage (23) portée par ledit bâti (12).

2. Dispositif de prélèvement d'air selon la revendication précédente, **caractérisé en ce que** ladite première extrémité (19) de la biellette (18) est reliée par une liaison rotulante à ladite seconde extrémité (16) du ressort (13).

3. Dispositif de prélèvement d'air selon la revendication précédente, **caractérisé en ce que** ladite première extrémité (19) de la biellette (18) comprend un orifice de montage d'une rotule (20) traversée par une bague de guidage (21) dans laquelle est engagée ladite seconde extrémité (16) du ressort (13).

4. Dispositif de prélèvement d'air selon l'une des revendications 1 à 3, **caractérisé en ce que** ladite vis de réglage (23) comprend un corps tubulaire à filetage interne qui traverse une paroi dudit bâti (12) et dans lequel est vissée ladite seconde extrémité (22) filetée de la biellette (18), et une tête (24) qui prend appui sur ladite paroi et est configurée pour coopérer avec un outil d'entraînement en rotation de cette vis.

5. Dispositif de prélèvement d'air selon l'une des revendications 1 à 4, **caractérisé en ce qu'**un écrou (25) d'immobilisation en rotation est vissé sur la vis de réglage (23).

6. Dispositif de prélèvement d'air la revendications 5 , **caractérisé en ce que** ledit écrou (25) est vissé sur un filetage externe dudit corps tubulaire et prend appui sur ladite paroi du bâti (12) du côté opposé à ladite tête.

7. Dispositif de prélèvement d'air selon l'une des revendications 1 à 6, **caractérisé en ce que** ladite biellette (18) s'étend le long d'un axe (Y) sensiblement perpendiculaire à ladite seconde extrémité (16) du ressort.

8. Dispositif de prélèvement d'air selon l'une des revendications 1 à 7, **caractérisé en ce que** ladite biellette (18) s'étend le long d'un axe (Y) sensiblement perpendiculaire à l'axe de rotation (X) du volet.

9. Dispositif de prélèvement d'air selon l'une des revendications précédentes, **caractérisé en ce que** ledit ressort (13) est hélicoïdal et s'étend sensiblement autour dudit axe (X) de rotation du volet.

## Patentansprüche

1. Luftentnahmevorrichtung für einen Flugzeugmotor, umfassend ein Gestell (12) und eine Klappe, die um eine dem Gestell (12) zugewandte Achse (X) drehbar ist, wobei die Vorrichtung weiter ein Rückstellsystem umfasst, das konfiguriert ist, um die Klappe in eine bestimmte Position um die Achse (X) zu drängen, und eine Drehfeder (13) umfasst, von der ein erstes Ende (15) mit der Klappe verbunden ist und von der ein zweites Ende (16) mit dem Gestell (12) verbunden ist, **dadurch gekennzeichnet, dass** das zweite Ende (16) über Einstellmittel (17) durch Verschraubung der Federvorspannung mit dem Gestell verbunden ist, wenn sich die Klappe in der bestimmten Position befindet;
wobei die Einstellmittel (17) ein Schaltgestänge (18) umfassen, von dem ein erstes Ende (19) an dem zweiten Ende (16) der Feder (13) angegliedert ist und von dem ein gegenüberliegendes, zweites Ende (22) in eine rohrförmige Einstellschraube (23), die von dem Gestell (12) getragen wird, gewunden und festgeschraubt ist.

2. Luftentnahmevorrichtung nach dem vorstehenden Anspruch, **dadurch gekennzeichnet, dass** das erste Ende (19) des Schaltgestänges (18) über eine gelenkige Verbindung mit dem zweiten Ende (16) der Feder (13) verbunden ist.

3. Luftentnahmevorrichtung nach dem vorstehenden Anspruch, **dadurch gekennzeichnet, dass** das erste Ende (19) des Schaltgestänges (18) eine Montageöffnung eines von einem Führungsring (21) durchkreuzten Gelenks (20) umfasst, in den das zweite Ende (16) der Feder (13) eingreift.

4. Luftentnahmevorrichtung nach einem der Ansprüche 1 bis 3, **dadurch gekennzeichnet, dass** die Einstellschraube (23) einen rohrförmigen Körper mit einem Innengewinde umfasst, der eine Wand des Gestells (12) durchkreuzt und in den das gewundene, zweite Ende (22) des Schaltgestänges (18) festgeschraubt ist, und einen Kopf (24) umfasst, der auf der Wand aufliegt und konfiguriert ist, um mit einem Antriebswerkzeug zum Drehen dieser Schraube zusammenzuwirken.

5. Luftentnahmevorrichtung nach einem der Ansprüche 1 bis 4, **dadurch gekennzeichnet, dass** eine Schraubenmutter (25) zum Sperren einer Drehung an der Einstellschraube (23) festgeschraubt ist.

6. Luftentnahmevorrichtung nach Anspruch 5, **dadurch gekennzeichnet, dass** die Schraubenmutter (25) an einem Außengewinde des rohrförmigen Körpers festgeschraubt ist und auf der dem Kopf gegenüberliegenden Seite der Wand des Gestells (12) aufliegt.

7. Luftentnahmevorrichtung nach einem der Ansprüche 1 bis 6, **dadurch gekennzeichnet, dass** sich das Schaltgestänge (18) entlang einer Achse (Y) im Wesentlichen senkrecht zu dem zweiten Ende (16) der Feder erstreckt.

8. Luftentnahmevorrichtung nach einem der Ansprüche 1 bis 7, **dadurch gekennzeichnet, dass** sich das Schaltgestänge (18) entlang einer Achse (Y) im Wesentlichen senkrecht zu der Drehachse (X) der Klappe erstreckt.

9. Luftentnahmevorrichtung nach einem der vorstehenden Ansprüche, **dadurch gekennzeichnet, dass** die Feder (13) spiralförmig ist und sich im Wesentlichen um die Drehachse (X) der Klappe erstreckt.

## Claims

1. An air bleed device for an aircraft engine, comprising a frame (12) and a flap able to rotate around an axis (X) in relation to the frame (12), the device further comprising a return system configured to bias the flap into a determined position around the axis (X) and comprising a torsion spring (13), a first end (15) of which is connected to the flap and a second end (16) of which is connected to the frame (12), **characterized in that** said second end (16) is connected to the frame by means for adjusting (17) the preload of the spring by screwing when the flap is in said determined position;
said means for adjusting (17) comprise a connecting rod (18), a first end (19) of which is articulated on said second end (16) of the spring (13) and an opposite second end (22) of which is threaded and screwed into a tubular adjustment screw (23) carried by said frame (12).

2. The air bleed device according to the preceding claim, **characterized in that** said first end (19) of the connecting rod (18) is connected by a rotatable connection to said second end (16) of the spring (13).

3. The air bleed device according to the preceding claim, **characterized in that** said first end (19) of the connecting rod (18) comprises a mounting hole for a ball joint (20) crossed by a guide ring (21) in which said second end (16) of the spring (13) is engaged.

4. The air bleed device according to one of claims 1 to 3, **characterized in that** said adjustment screw (23) comprises a tubular body with inner thread which passes through a wall of said frame (12) and in which said second threaded end (22) of the connecting rod (18) is screwed, and a head (24) which rests on said wall and is configured to cooperate with a tool for driving this screw in rotation.

5. The air bleed device according to one of claims 1 to 4, **characterized in that** a rotation preventing locking nut (25) is screwed onto the adjustment screw (23).

6. The air bleed device according to claim 5, **characterized in that** said nut (25) is screwed on an outer thread of said tubular body and rests on said wall of the frame (12) on the side opposite to said head.

7. The air bleed device according to one of claims 1 to 6, **characterized in that** said connecting rod (18) extends along an axis (Y) substantially perpendicular to said second end (16) of the spring.

8. The air bleed device according to one of claims 1 to 7, **characterized in that** said connecting rod (18) extends along an axis (Y) substantially perpendicular to the axis of rotation (X) of the flap.

9. The air bleed device according to one of the preceding claims, **characterized in that** said spring (13) is helical and extends substantially around said axis (X) of rotation of the flap.
